# EUROPEAN PATENT APPLICATION

(11) **EP 4 316 242 A1**
(43) Date of publication of application: **07.02.2024**
(21) Application number: 23178958.7
(22) Date of filing: 13.06.2023
(51) Int. Cl.: A01N 25/10, A01N 33/12, A01P 1/00

(54) **ANTIMICROBIAL COMPOSITION COMPRISING A DIOCTYLDIMETHYLAMMONIUM COMPOUND**

(30) Priority: 01.08.2022 EP 22188009
(71) Applicant: The Procter & Gamble Company, Cincinnati, OH 45202 (US)
(72) Inventor: SHERRY, Alan Edward, Cincinnati, 45202 (US)
(74) Representative: P&G Patent Belgium UK

(57) **Abstract**

An aqueous antimicrobial composition comprising:
i) from about 0.01% to about 0.5% by weight of the composition of a dioctyldimethylammonium compound;
ii) from about 0.01% to about 1.5% by weight of the composition of a surfactant selected from the group consisting of non-ionic surfactant, cationic surfactant, zwitterionic surfactant, and a mixture thereof;
iii) from 0 to about 0.5% by weight of the composition of a polymer; and
iv) at least 80% by weight of the composition of water.

## Description

### FIELD OF THE INVENTION

The present invention is in the field of antimicrobial compositions. The composition provides residual biocidal properties.

### BACKGROUND OF THE INVENTION

Compositions such as those described in WO 2016/086012 A1 provide long-lasting antimicrobial benefits but can also leave behind a sticky/tacky feel on surfaces and/or a poor shine profile feel that connotes lack of cleanliness to the user. The compositions require relatively high levels of polymer that can result in increased surface residue and decreased ability to remove existing soils, meaning poorer cleaning. Additionally, the need for high quaternary ammonium active levels to accomplish long-lasting antimicrobial benefits can lead to increased composition toxicity.

Therefore, a need remains for an antimicrobial cleaning composition that provides long - lasting residual antibacterial protection, improve surface feel and shine, better cleaning while mitigating reduced toxicity and safety concerns.

### SUMMARY OF THE INVENTION

It has surprisingly been found that judicious selection of surfactant and quaternary ammonium compound type can provide these desired attributes. According to the first aspect of the present invention, there is provided an antimicrobial cleaning composition. The composition is stable on storage. The composition provides good cleaning and good shine and it does not leave the treated surface streaky or tacky. The composition provides strong biocidal properties to the treated surface and can present a good scent profile. There is also provided a composition with reduced or no polymer content, and reduced or no glycol ether content, minimizing left behind residue and reducing cost.

According to the second aspect of the invention there is provided an article treated with the composition of the invention, the article is preferably a non-woven substrate, more preferably in the form of a substrate, the substrate can be disposable or partially reusable. Preferably, the article is a wipe treated with the composition of the invention.

According to the third aspect of the invention there is provided a product comprising the composition of the invention and a spray device. The spray device can be an aerosol spray can or a trigger spray bottle.

According to the fourth aspect of the invention there is provided a method of treating a surface, preferably an inanimate surface, with the composition of the invention to provide residual biocidal properties to the surface.

According to the fifth aspect of the invention there is provided the use of the composition of the invention to provide residual biocidal properties to an inanimate surface, in particular to a hard surface.

The elements of the composition of the invention described in relation to the first aspect of the invention apply *mutatis mutandis* to the other aspects of the invention.

### DETAILED DESCRIPTION OF THE INVENTION

All percentages, ratios and proportions used herein are by weight percent of the composition, unless otherwise specified. All average values are calculated "by weight" of the composition, unless otherwise expressly indicated. All ratios are calculated as a weight/weight level, unless otherwise specified.

All measurements are performed at 25°C unless otherwise specified.

Unless otherwise noted, all component or composition levels are in reference to the active portion of that component or composition, and are exclusive of impurities, for example, residual solvents or by-products, which may be present in commercially available sources of such components or compositions.

As used herein, the terms "microbe" or "microbial" should be interpreted to refer to any of the microscopic organisms studied by microbiologists or found in the use environment of a treated article. Such organisms include, but are not limited to, bacteria and fungi as well as other single-celled organisms such as mould and algae. Viral particles (i.e., enveloped and non-enveloped viruses) and other infectious agents are also included in the term microbe.

"Antimicrobial" further should be understood to encompass both microbicidal and microbiostatic properties. That is, the term encompasses microbe killing, leading to a reduction in number of microbes, as well as a retarding effect of microbial growth, wherein numbers may remain more or less constant (but nonetheless allowing for slight increase/ decrease).

By "substantially free of a compound" is herein meant that the compound has not been purposely added to the composition. The level of the compound is less than 0.0001% by weight of the composition. For example, "substantially free of alkyldimethylbenzylammonium compound" means that the composition comprises less than 0.0001% by weight of the composition of alkyldimethylbenzylammonium compound.

For ease of discussion, this description uses the term antimicrobial to denote a broad-spectrum activity (e.g., against bacteria, viruses and fungi). When speaking of efficacy against a particular microorganism or taxonomic rank, the more focused term will be used (e.g., antifungal to denote efficacy against fungal growth in particular). Using the above example, it should be understood that efficacy against fungi does not in any way preclude the possibility that the same antimicrobial composition may demonstrate efficacy against another class of microbes.

Residual biocidal properties refer to achieving at least 99.9% microbial reduction in the Environmental Protection Agency (EPA)-approved 24-hour Residual Self Sanitizing (RSS) test methodology for dried product residues on hard, non-porous surfaces (EPA Protocol #01-1A). That is, the compositions of the invention are able to deliver at least 99.9% microbial reduction after a 12-abrasion and 5- reinoculation cycles, providing protection for at least a 24 hour period.

### Antimicrobial composition

The present invention is directed to an antimicrobial composition. The composition comprises:
i) from about 0.01% to about 0.5%, preferably from 0.05% to 0.5%, more preferably from 0.08% to 0.3% by weight of the composition of a dioctyldimethylammonium compound;
ii) from about 0.01% to about 1.5%, preferably from 0.1% to 0.5% by weight of the composition of a surfactant selected from the group consisting of non-ionic surfactant, cationic surfactant, zwitterionic surfactant, and a mixture thereof, preferably the surfactant is selected from the group consisting of C6-C12 alkylpolyglucoside, C8-C12 dimethylamine oxide, C8-C12 alkylbetaine, and a mixture thereof;
iii) from 0 to about 0.5%, preferably from 0 to about 0.3% by weight of the composition of a polymer;
iv) at least 80% by weight of the composition of water; and wherein the composition is substantially free of alkyldimethylbenzylammonium compound, preferably, the composition is free of alkyldimethylbenzylammonium compound.

The composition can further comprise a pH adjusting agent, di-valent ion, dye and/or a fragrance, among other components. The composition is an aqueous solution, preferably the composition comprises more than 80%, more preferably more than 85% and especially from 90 to 99.5% by weight of the composition of water.

The composition is formulated to provide antimicrobial and residual biocidal properties for at least 24 hours by delivering at least 99.9% microbial reduction in the EPA-approved 24-hour Residual Self Sanitizer (RSS) test method (EPA #01-1A). Alternatively, the composition is formulated to provide antimicrobial and residual biocidal properties for at least 24 hours by delivering at least 99.9% microbial reduction in the EPA-approved 24-hour Residual Self Disinfectant (RSD) test method (EPA #01-1A). The composition can be applied to a surface by spraying, rolling, fogging, wiping or other means. Preferably, the composition is applied to the surface and left to dry. The composition acts as a surface sanitizer, killing or inactivating infectious microbes present on the surface for at least 24 hours. In one embodiment, the composition is also effective at inactivating enveloped viruses present on the surface for at least 24 hours.

Upon drying, the composition of the invention leaves behind a residual protective film or coating on the surface. The coating will remain on the surface and is water- and wear-resistant; it is durable to multiple touches and wearing of the surface. The treated surface shows good shine appearance as the coating or film is engineered to be nearly invisible. At the same time, the residual film or coating possesses a biocidal property, enabling it to maintain protection of the surface against microbial contamination, including bacteria, viruses and fungi, for an extended time period (e.g., at least 24 hours, more preferably at least 48 hours or 72 hours) following application. The composition of the invention surprisingly provides residual biocidal properties even when the composition comprises a very low level of polymer or when the composition is completely free of polymer.

### Dioctyldimethylammonium (DODMA) compound

The compositions of the invention comprise a dioctyldimethylammonium compound. The DODMA compound can have a counterion selected from the group consisting of a halogen, sulfonate, sulfate, phosphonate, phosphate, saccharinate, carbonate/bicarbonate, hydroxy, or carboxylate. Preferably the dioctyldimethylammonium compound is dioctyldimethylammonium chloride (DODMAC). The chemical structure of DODMAC is as follows:

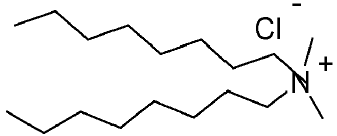

Non-limiting examples of suitable commercially available raw materials comprising DODMAC include Bardac LF-80, an 80% active solution of DODMAC in water (∼10%) ethanol (∼10%), Bardac 2080, an 80% active quaternary ammonium compound solution comprising 25% DODMAC by weight of the raw material active, Bardac 208M, an 80% active quaternary ammonium compound solution comprising 15% is DODMAC by weight of the raw material active. Bardac materials are supplied by the Arxada company. Non-limiting examples of other raw materials comprising DODMAC include BTC 885, supplied by Stepan Corporation as a 50% active quaternary ammonium compound solution that comprises 12% DODMAC by weight of the raw material active, and Maquat 615M, supplied by Pilot Chemical, also a 50% active quaternary ammonium compound solution that comprises 12% DODMAC by weight of the raw material active.

The composition comprises from about 0.05% to about 0.5%, preferably from about 0.08% to about 0.30%, and especially from about 0.08% to about 0.25% by weight of the composition of DODMA, preferably DODMAC. In one embodiment, the DODMA compound is present in the composition along with other biocidal quaternary ammonium compounds. Blends include DODMAC with octyldecyldimethylammonium chloride and didecyldimethylammonium chloride, or DODMAC with C12-C16 alkylbenzyldimethylammonium chloride, or DODMAC in combination with octyldecyldimethylammonium chloride, didecyldimethyl ammonium chloride and C12-C16 alkyldimethylbenzyl ammonium chloride. Use of blends can help improve the solubility of DODMAC in specific compositions of the invention. Quaternary ammonium blends can also help mitigate the toxicity of DODMAC-containing compositions.

In a preferred embodiment, a DODMA compound is the only biocidal quaternary ammonium compound present in the composition. This can be beneficial in multiple ways: first, it is surprisingly found that a DODMA compound, preferably DODMAC, is the most effective quaternary ammonium compound for providing long-lasting residual efficiency (e.g., US EPA Protocol #01-1A RSS test vs. *Klebsiella aeruginosa*)*.* Surprisingly, residual self-sanitizer benefits are achieved at low levels of DODMA compound even in the complete absence of polymer. In such a case, other quaternary ammonium compounds are simply not needed, and frequently contribute little or nothing to RSS activity to the DODMA compound -comprising composition. DODMA-only systems are shown to deliver much stronger RSS results vs. a non-DODMA comprising compositions even when the alternative quaternary ammonium compound content (e.g., didecyldimethylammonium chloride) content is several times higher.
DODMA-only based compositions, in combination with the most preferred surfactants of the invention, deliver superior surface shine end result appearance. That is, blends of quaternary ammonium compound types do not provide as good of a final surface appearance as the DODMA-only system does.

### Polymer

The composition comprises from 0 to about 0.5% by weight of the composition of a polymer, preferably the composition comprises no more than 0.3%, preferably no more than 0.20% by weight of the composition of polymer. Preferably, the composition is completely free of polymer. It has surprisingly been found that the composition can successfully deliver residual biocidal activity even in complete absence of polymer. Still, polymer incorporation into the composition of the invention can be beneficial. Polymer can be incorporated with the goal of enhancing visual shine appearance of the treated hard surface. Polymer can enhance the wetting properties of the composition, resulting in visually reduced streaking and spotting on a surface. Yet another advantage of polymer can be for cleaning, especially for removal of particulate and greasy particulate soils or for delivering a (preferably non-visible) film on a surface that promotes easier `next time' use soil removal. Preferred polymers for use herein are non-ionic, cationic or zwitterionic polymers. Anionic polymers, which include monomers comprising pH neutralized moieties of acrylic acid, methacrylic and maleic acid are preferably excluded from the composition of the invention.

In one embodiment, the polymer comprises one or more a vinylpyrrolidone monomers of generalized chemical structure: 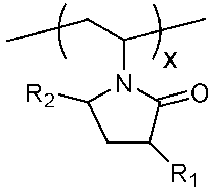 wherein R1 and R2 are independently H, or a C1-C6 hydrocarbon chain, and where x is from about 50 to about 100,000. The polymer preferably has a molecular weight of from about 5,000 to about 40,000 g/mol, more preferably from about 10,000 to about 100,000 g/mol, even more preferably from about 12,000 to about 60,000 g/mol. An even more preferred polymer is partially butylated polyvinylpyrrolidone. Non-limiting examples of commercially available polyvinylpyrrolidone and substituted polyvinylpyrrolidone polymers for use in the invention include Luvitec K-17, a homopolymer of PVP sold by BASF (Mw ~ 9,000), PVP-K60, a homopolymer of PVP sold by Ashland (Mw ~ 60,000), and Ganex P-904 LC, a copolymer of vinyl pyrrolidone and butylated vinyl pyrrolidone sold by Ashland (Mw ~ 16,000).

In another embodiment, the polymer is cationic and preferably hydrophilic. The polymer can comprise one or more a vinylpyrrolidone derivative monomer, and in some cases a second monomer class comprising a pendant amino group or quaternary ammonium group as described below. Ternary polymers comprising vinyl pyrrolidone or substituted vinyl pyrrolidone monomer, a second monomer with pendant amino or quaternary groups and a third non-ionic or cationic monomer can also be used. Amino groups that can be protonated and quaternary ammonium groups within the polymer enable the polymer to bond to negatively-charged hard surfaces such as glass and porcelain and deliver surface protection. It is believed that polymer anchoring (via pendant cationic groups) to a hard surface can help reduce or prevent soil anchoring/adhesion on said hard surface, which can result in easier next time cleaning benefits. Moreover, the selection of a hydrophilic polymer is advantageous in that oily and greasy soils do not interact with the deposited polymer film and are therefore easier to remove. Hydrophilic polymers promote better product surface wetting and are also water strippable (e.g., with the next product application), thereby eliminating build-up problems that can lead to a dull and dirty vs. shiny and clean hard surface appearance. Vinyl pyrrolidone-based polymers, especially those further comprising pseudo cationic (amino) groups or quaternary ammonium groups can also improve the shine end result of treated surfaces.

Many of the desirable vinylpyrrolidone-based polymers described above also include acrylate and methacrylate esters, or acrylamide and methacrylamide amide-based monomers of chemical structure: 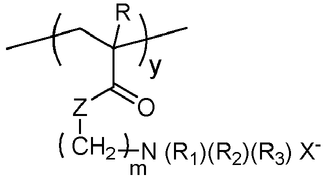 wherein R = H or CH₃, Z = O, NH, N-CH₃, m = 1-4, R₁, R₂, R₃ are independently H, CH₃ or a C2-C6 hydrocarbyl group, y is from about 10 to about 10,000, and X is a counter-ion. The counter-ion can be chloride, hydrogen sulfate, methyl sulfate, sulfate, or any counter-ion present in the formulation, such as sodium, potassium, ammonium, bicarbonate, acetate, bromide, and the like. Those skilled in the art will note that the above chemical structure shows a rendering of a pendant quaternary ammonium group or a non-ionic amino group that is rendered cationic by protonation. Non-limiting examples of suitable commercially available cationic copolymers include Sorez HS-205 a copolymer of vinylpyrrolidone and dimethylaminoethylmethacrylate sold by Ashland (Mw ~ 1,000,000), Gafquat 440 (or 755, 755N or 734) a copolymer of vinylpyrrolidone and dimethylaminoethylmethacrylate quaternized with diethyl sulfate (Mw ~ 1,000,000) sold by Ashland, Luvitec VA 64W a copolymer of vinylpyrrolidone and vinyl acetate sold by BASF (Mw ∼65,000), Styleze CC-10, a copolymer of vinylpyrrolidone and dimethylaminopropyl methacrylamide sold by Ashland (with chloride counter-ion, Mw ∼ 1,300,000), Setleze 3000, another copolymer of vinylpyrrolidone and dimethylaminopropyl methacrylamide sold by Ashland (with sulfate counter-ion, Mw ∼ 1,700,000), Gafquat HS-100 a copolymer of vinyl pyrrolidone and trimethylammonium chloride propylmethacrylamide sold by Ashland (Mw ∼1,000,000), and Luvitec VPC 55K65W a copolymer of vinylpyrrolidone and vinylcaprolactam sold by BASF (Mw ∼ 750,000). Styleze CC-10, Setleze 300 and Gafquat 440 from Ashland are particularly preferred 'shine' polymers for enhancing the visual appearance of surfaces and may additionally improve ease of `next time' cleaning. Non-limiting examples of suitable commercially available cationic terpolymers for the invention include Styleze W-10, a terpolymer of vinylpyrrolidone, dimethylaminopropylmethacrylamide and dimethylaminopropylmethacrylamide quaternized with N-dodecyl chloride sold by Ashland (Mw ∼2,700,000), Gaffix VC-713 a terpolymer of vinylpyrrolidone, vinyl caprolactam and diethylaminoethylmethacrylate sold by Ashland (Mw ∼ 80,000) and Luviset Clear AT3 a terpolymer of vinylpyrrolidone, vinylimidazole and methacrylamide sold by BASF. Those skilled in the art will appreciate that manipulation of polymer molecular weight and hydrophilicity-hydrophobicity, and degree of cationic character can fine tune polymer physical property characteristics as needed.

The composition can also comprise a soil entrainment polymer to aid in removal of particulate soils from hard surfaces. As such, the soil entrainment polymer provides a complementary benefit to the remainder of the composition. The entrainment polymer has a molecular weight from about 50,000 to about 10,000,000, more preferably from about 100,000 to about 8,000,000. Examples of such polymers for use in hard surface cleaning applications are disclosed in US 6,653,274 and US 8,568,702 (herein incorporated by reference). The entrainment polymer is a flocculating or coagulating polymer and has high affinity for cellulosic fibres typically used in cleaning implements (e.g., paper towels, newspapers, pre-moistened wipes). Such properties drive the soil removal process and limit re-deposition. Preferred polymers are either highly ethoxylated materials or highly charged materials. Non-limiting examples of suitable soil entrainment polymers include Hyperfloc NE823F, Hyperfloc ND823 A from Hychem, Mirapol Surf S-100 and Mirapol HSC 300 from Solvay, and Lupasol SK from BASF. Mirapol HSC 300 is a particularly preferred entrainment polymer that combines high molecular weight (Mw > 500,000) together with both positively charged and negatively charged monomers and has the chemical structure: 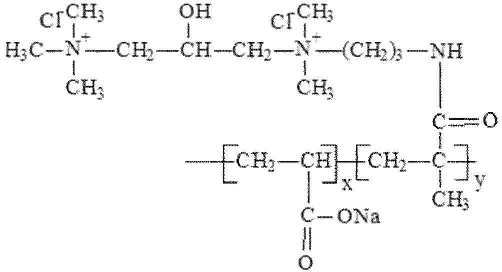 wherein the weight ratio y/z is from about 1:5 to about 5:1, more preferably y/z ~ 2:1. This polymer displays a high affinity for particulate soils and hydrophilic fibres, and additionally can enhance the wetting properties of the overall composition. If present, the soil entrainment polymer comprises less than 0.2% by weight of the overall composition. More preferably the soil entrainment polymer or mixture of polymers) comprises from about 0.002% to about 0.15% and most preferably from about 0.005% to about 0.10% or from about 0.01% to about 0.05% by weight of the overall composition.

### Surfactant

The composition of the invention comprises from about 0.01% to about 1.5% by weight of the composition of a surfactant selected from the group consisting of non-ionic surfactant, cationic surfactant, zwitterionic surfactant, and a mixture thereof. The surfactant contributes to cleaning and spreading of the composition on the surface to be cleaned. The composition is preferably free of anionic surfactant.
In one embodiment, the composition comprises from 0.03 to about 0.6%, more preferably from 0.05 to about 0.5% by weight of the composition of a surfactant selected from the group consisting of 2-ethylhexyl alkylpolyglucoside, C8-C10 alkylpolyglucoside, C8-C12 alkyldimethyl amine oxide, especially C10 dimethylamine oxide, C8-C12 betaine, especially C10 betaine, and a mixture thereof. Average chain length of a surfactant is computed by taking the weight average of the longest carbon chain originating from the head group for each surfactant raw material or blend of raw materials. For example, if a composition comprises 0.6% C10 dimethylamine oxide and 0.4% C12 dimethylamine oxide, then the average amine oxide chain length is 60% C10 + 40% C12 or 10.8 carbons atoms.

### Alkylpolyglycoside non-ionic surfactant

Alkylpolyglycosides are biodegradable non-ionic surfactants especially suitable to be used in the compositions of the present invention. Polyglycosides include polypentosides and polyglucoside and other sugar-based non-ionic surfactants. Alkylpolyglycosides include those represented by the formula R₁O(Z)ₐ wherein R is a monovalent organic radical having from about 6 to about 12 carbon atoms, Z is a saccharide residue having 5 or 6 carbon atoms, preferably 6 carbon atoms, and a is a number from 1 to 3 (i.e., alkylpolyglucoside). Examples of suitable alkylpolyglucoside (APG) surfactants are the TRITON^{™} alkylpolyglucosides from Dow; Agnique PG, Disponil APG and Glucopon alkylpolyglucosides from BASF. Non-limiting examples of preferred commercially available polyglucosides include AG 6202, a 2-ethylhexyl APG raw material from Nouryon, Triton CG-50 and Triton CG-110, both of which are C8-10 APG raw materials from Dow Chemical, and Glucopon 225 a C8-C10 APG from BASF. Other examples include Glucopon 325 and Glucopon 425 sold by BASF.

Alkylpolyglucosides having a chain length of less than 12 carbon atoms, in combination with the DODMA compounds of the invention, are found to provide much improved shine end result on hard surfaces relative to other suitable surfactants. Alkylpolyglucosides in combination with the DODMA compounds of the invention are also found to provide fast bactericidal, fungicidal and virucidal properties, and deliver 24-hour RSS benefits.

### Amine oxide non-ionic surfactant

Amine oxide surfactants are suitable for use in the compositions of the invention. The amine oxides of the invention can be represented by the formula R1R2R3NO wherein each of R1, R2 and R3 is independently a saturated or unsaturated, substituted or unsubstituted, linear or branched hydrocarbon chain having from 1 to 18 carbon atoms. The amine oxides of the invention are represented by the formula R1R2R3NO wherein R1 is a C8-C12 hydrocarbon, and R2 and R3 are C1-C4 alkyl or hydroxyalkyl groups, (e.g., hydroxyethyl), more preferably methyl groups.

Non-limiting examples of commercially available sources of relevant amine oxides include: C8 dimethyl amine oxide available under the trade name Genaminox^{®} OC from Clariant and Macat AO-8 from Pilot; C10 dimethylamine oxide is available under the trade name Genaminox^{®} K-10 from Clariant and Macat AO-10 from Pilot Chemical; C12 dimethylamine oxide available under the tradename Macat AO-12 from Pilot Chemical; C12-14 dimethylamine oxide available under the tradename Ammonyx LO from Stepan Corporation.

Alkyl amine oxides having a chain length 12 carbon atoms or less, in combination with the DODMA compound of the invention, are found to provide much improved shine end result on hard surfaces relative to most other suitable surfactants. Especially preferred for use herein are alkyl amine oxides having a chain length of 10 carbon atoms.

### Zwitterionic and amphoteric surfactants

The composition of the invention may comprise an amphoteric surfactant, a zwitterionic surfactant, and mixtures thereof. Suitable zwitterionic surfactants typically contain both cationic and anionic groups in substantially equivalent proportions so as to be electrically neutral at the pH of use, and are well known in the art. Some common examples of zwitterionic surfactants are described in US. Pat. Nos. 2,082,275, 2,702,279 and 2,255,082.

Suitable zwitteronic surfactants include betaines such alkylbetaines, alkylamidobetaine, amidazoliniumbetaine, sulfobetaine (INCI Sultaines) as well as the phosphobetaine.
Suitable betaines are the alkylbetaines of the formula (Ia), the alkylamido betaine of the formula (Ib), the sulfo betaines of the formula (Ic) and the amido sulfobetaine of the formula (Id);

R1-N+(CH3)2-CH2COO- (Ia)

R1-CO-NH(CH2)3-N+(CH3)2-CH2COO- (Ib)

R1-N+(CH3)2-CH2CH(OH)CH2SO3- (Ic)

R1-CO-NH-(CH2)3-N+(CH3)2-CH2CH(OH)CH2SO3- (Id)

in which R1 is a saturated or unsaturated C6-C18 alkyl residue, preferably C8-C12 alkyl residue. Particularly preferred are betaines of the formula Ia, especially C8-C12 alkylbetaines or C10 betaine.

Amphoteric surfactants can be either cationic or anionic depending upon the pH of the composition. Suitable amphoteric surfactants include dodecylbeta-alanine, N-alkyltaurines such as the one prepared by reacting dodecylamine with sodium isethionate, as taught in US. Pat. No. 2,658,072, N-higher alkylaspartic acids such as those taught in U.S. Pat. No. 2,438,091. Other suitable amphoteric surfactants include disodium capryloampho dipropionate (Miranol JBS), sodium mixed C8 amphocarboxylate (Miranol JEM Conc), and sodium capryloampho hydroxypropyl sulfonate (Miranol JS) and disodium capryloamphodiacetate (Mackam 2CY 75-Solvay Novecare), octyliminodipropionate (Ampholak YJH40-Akzo Nobel), sodium lauriminodipropionate (Mirataine H2C-HA-Solvay Novecare), and sodium lauroamphohydroxypropylsulfonate (Mackam LS- Solvay Novecare).

### Alcohol alkoxylate non-ionic surfactants

Suitable alcohol alkoxylate non-ionic surfactants are according to the formula RO-(A)nH, wherein: R is a primary C4 to C18, preferably a C6 to C16, more preferably a C6 to C14 branched or linear alkyl chain, or a C6 to C28 alkyl benzene chain; A is an ethoxy or propoxy or butoxy unit, or mixtures thereof, and wherein n is from 1 to 30, preferably from 1 to 15, more preferably from 3 to 12 even more preferably from 3 to 8. Preferred R chains for use herein are the C6 to C16 linear or branched alkyl chains.

Non-limiting examples of suitable linear alkoxylated non-ionic surfactants for use herein Dobanol^{®} 91-5 (R is a mixture of C9 to C11 alkyl chains, n is 5); Dobanol^{®} 91-10 (R is a mixture of C9 to C11 alkyl chains, n is 10); Greenbentine DE60 (R is a C10 linear alkyl chain, n is 6); Marlipal 10-8 (R is a C10 linear alkyl chain, n is 8); Neodol 91-6 ( R is a mixture of C9 to C11 alkyl chains, n is 6); Neodol 91-8 (R is a mixture of C9 to C11 alkyl chains, n is 8); Empilan^{®} KBE21 (R is a mixture of C12 and C 14 alkyl chains, n is 21); Lutensol ON30 (R is C10 linear alkyl chain, n is 3); Lutensol ON50 (R is C10 linear alkyl chain, n is 5); Lutensol ON70 (R is C10 linear alkyl chain, n is 7); Novel 610-3.5 (R is mixture of C6 to C10 linear alkyl chains, n is 3.5); Novel 810FD-5 (R is mixture of C8 to C10 linear alkyl chains, n is 5); Novel 10-4 (R is C10 linear alkyl chain, n is 4); Lialethl^{®} 11-5 (R is a C11 linear alkyl chain, n is 5); Lialethl^{®} 11-21 (R is a mixture of linear and branched C11 alkyl chain, n is 21), or mixtures thereof.

The alkoxylated non-ionic surfactant may be a secondary alcohol ethoxylate such as for example the TergitolTM-15-S surfactants having the general formula shown below and commercially available by DOW

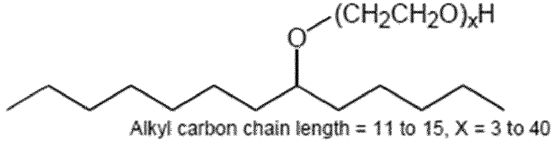

### Tergitol 15-S surfactants

Preferred secondary alcohol ethoxylate surfactants have 3-9 EO units.
Another suitable alkoxylate non-ionic surfactant is an alkyl ethoxy alkoxy alcohol, preferably wherein the alkoxy part of the molecule is propoxy, or butoxy, or propoxy-butoxy. More preferred alkyl ethoxy alkoxy alcohols are of formula (II): 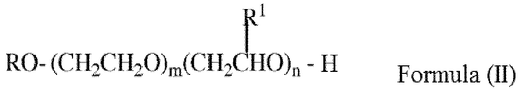 wherein:
R is a branched or unbranched alkyl radical having 8 to 16 carbon atoms;
   R1 is a branched or unbranched alkyl radical having 1 to 5 carbon atoms;
   n is from 1 to 10; and m is from 6 to 35.
R is preferably from 12 to 15, preferably 13 carbon atoms. R1 is preferably a branched alkyl radical having from 1 to 2 carbon atoms. n is preferably 1 to 5. m is preferably from 8 to 25. Preferably, the weight average molecular weight of the ethoxylated alkoxylated non-ionic surfactant of formula (II) is from 500 to 2000g/mol, more preferably from 600 to 1700 g/mol, most preferably 800 to 1500 g/mol.

The ethoxylated alkoxylated non-ionic surfactant can be a polyoxyalkylene copolymer. The polyoxyalkylene copolymer can be a block-heteric ethoxylated alkoxylate non-ionic surfactant, though block-block surfactants are preferred. Suitable polyoxyalkylene block copolymers include ethylene oxide/propylene oxide block polymers, of formula (III):

(EO)x(PO)y(EO)x,

or

(PO)x(EO)y(PO)x

wherein:
EO represents an ethylene oxide unit, PO represents a propylene oxide unit, and x and y are numbers detailing the average number of moles ethylene oxide and propylene oxide in each mole of product. Such materials tend to have higher molecular weights than most non-ionic surfactants, and as such can range between 1000 and 30000 g/mol, although the molecular weight should be above 2200 and preferably below 13000 to be in accordance with the invention. A preferred range for the molecular weight of the polymeric non-ionic surfactant is from 2400 to 11500 Daltons. BASF (Mount Olive, N.J.) manufactures a suitable set of derivatives and markets them under the Pluronic trademarks. Examples of these are Pluronic (trademark) F77, L62 and F88 which have the molecular weight of 6600, 2450 and 11400 g/mol respectively.

Other suitable ethoxylated alkoxylate non-ionic surfactants are described in Chapter 7 of Surfactant Science and Technology, Third Edition, Wiley Press, ISBN 978-0-471-68024-6.

### Ratio of surfactant to quaternary ammonium compound

Optimizing the surfactant to quaternary ammonium compound weight ratio involves resolving a trade-off between achieving residual biocidal benefits and promoting surface shine end result appearance. It is found that a lower surfactant to quaternary ammonium compound weight ratio (i.e., about 1.5:1 and lower) promotes residual biocidal RSS (or RSD) activity (*ceteris paribus*) but is non-ideal to drive good surface shine and cleaning. A high surfactant to quaternary ammonium compound weight ratio (i.e., about 1:1 and preferably higher) is beneficial for surface shine and cleaning properties (*ceteris paribus*) but is non-ideal to achieving strong RSS (or RSD) activity. As such, the surfactant to quaternary ammonium compound weight ratio can vary significantly depending on specific formulation objectives and cost targets. In one embodiment, the weight ratio of surfactant to quaternary ammonium compound is from about 0.2: 1 to about 1:1 or from about 0.5: 1 to 1:1. In another embodiment, the weight ratio of surfactant to quaternary ammonium compound is from about 1:1 to about 4:1, or from about 1:1 to about 3:1. Preferred weight ratios to simultaneously deliver residual biocidal and shine/cleaning requirements range from about 1.2: 1 to about 2:1 or from about 1.2: 1 to about 1.8:1.

### Anionic surfactants

Anionic surfactant is not preferred. If anionic surfactant is present, it is preferably present at low levels. The anionic surfactant can be selected from the group consisting of: an alkyl sulphate, an alkyl alkoxylate sulphate, a sulphonic acid or sulphonate surfactant, polycarboxylated anionic surfactants and mixtures thereof. The antimicrobial composition of the invention can comprise up to 0.2 wt%, preferably up to 0.1 wt% of anionic surfactant. In the most preferred embodiment, the composition is free of anionic surfactant.

### pH adjusting agents

Depending on the targeted uses, a composition of the present invention for home, institutional or industrial use may benefit from use of one or more pH buffers. For example, if the composition is used in the kitchen area, an alkaline pH product may be desired in order to effectively remove grease soils commonly found in the area. If the composition is used in a bathroom area, soap scum and hard water deposits may be the primary concern. In such cases, an acidic pH product may be more appropriate. Final pH of the composition is from about 3 to about 12, or from about 4 to about 11; in one embodiment the pH is from about 3 to about 7; in another embodiment the pH is from about 5 to about 11. There is no limitation on the types of pH adjusting agents that can be added into the liquid composition of the present invention. Example of pH adjusting agents that can be used include, but are not limited to, triethanolamine, diethanolamine, monoethanolamine, sodium hydroxide, sodium carbonate, ammonium hydroxide, potassium hydroxide, potassium carbonate, sodium bicarbonate, potassium bicarbonate, citric acid, acetic acid, and the like. Preferably, alkaline compositions comprise from about 0.01 to about 0.5% of an alkanol amine. In a preferred embodiment, monoethanolamine, monoisopropanolamine and or triethanolamine are used as pH adjusting agents. Acidic compositions comprise from 0.01 to 0.5% of an organic acid, preferably citric acid or lactic acid.

### Di-valent ion salt

Di-valent ion salts are optional ingredients that can be beneficial depending on the specific formulation. The primary purpose of di-valent ions is to aid the achievement of residual self sanitizer benefits on hard surfaces. Di-valent ions are provided by salts, especially magnesium and calcium salts; examples include magnesium chloride, magnesium acetate, magnesium sulfate, calcium chloride, calcium bromide, and the like. While not wishing to be limited by theory, it is believed that di-valent ions help reduce surface and interfacial tension of the compositions of the invention. This in turn can lead to improved film formation, especially in the presence of soil. Di-valent ions can be introduced in the form of tap water upon dilution of a concentrate or can be intentionally added as discrete components into the composition of the invention. When added as discrete species, the level of di-valent ion is from about 0.01% to about 2.0%, more preferably from about 0.02% to about 1.0%, or from about 0.02% to about 0.50% by weight of the composition.

### Fragrance and solvent

The composition may comprise a fragrance. The fragrance is a mixture of odorant raw materials, such as aromatic natural oils and aromatic chemicals, which taken together form a complex scent that delivers a number of benefits. These benefits may include the coverage of product base odour, scenting the product itself, and lingering scent radiating from the surface into the air after cleaning. When the composition is sprayed, the benefit may also include the delivery of scent to the air when spraying the composition on a surface, and the delivery of scent to the air while wiping the composition on the surface. The fragrance may comprise at least 3, at least 5, at least 7, at least 11, or at least 15 fragrance raw materials. The composition may comprise from 0.01% to 1%, or from 0.02% to 0.5%, or even from 0.03 % to 0.2% of fragrance by weight of the composition.

In one embodiment, the composition is free of glycol ether solvent thus providing additional freshness and additional degrees of freedom for fragrance selection and level. Glycol ethers typically have characteristic odours that can interfere with or alter the character of a desired fragrance or blends of fragrances. Additionally, it is found that glycol ethers can weaken the cidal strength of deposited DODMA compound, leading to reduced efficacy demonstrated in RSS tests. Moderately strong compositions can be rendered ineffective in the presence of excessive glycol ether. As such, it is preferred that the glycol ether content be kept low, preferably below 2%, more preferably below 1.5% or 1.0%. It is found that best RSS performance is often achieved in the complete absence of glycol ether compound. As such, lack of glycol ether represents one the preferred embodiments of the invention as it simultaneously maximizes clean fragrance character dissemination and residual self-sanitizer activity. When present, the glycol ether solvent is preferably ethylene glycol n-hexyl ether (e.g., tradename Hexyl Cellosolve^{®} available from Dow Chemical), from about 0.1% to about 2%, more preferably from 0.2% to about 1.2%, or from about 0.2% to about 0.75% by weight of the composition. Ethylene glycol n-hexyl ether can be particularly useful in a wet wipe disinfectant composition to mitigate de-wetting on surfaces during the dry-down process.

While glycol ether solvent other than ethylene glycol hexyl ether is generally discouraged for use herein, high vapor solvents such as ethanol, isopropanol, ethanolamine, and the like, can advantageously be utilized to enhance composition aesthetics and cleaning properties without impacting residual biocidal benefits.

### Other Optional components

The composition may include other adjuncts such as colorants, dyes, opacifiers, suds suppressors, hydrotropes, corrosion inhibitors, and the like. These materials can improve the composition aesthetics without impacting the primary benefits provided by the invention.

### Water

The compositions disclosed herein comprise at least 60% water, more preferably at least 85% water. The water may be of any hardness. The water may be de-ionized water, reverse-osmosis-treated water, distilled water, tap water, or soft water (typically, soft water does not exceed 40 ppm hardness (as CaCO₃)). The amount of water in a given composition depends on the degree to which the composition is concentrated. Ready-to-use compositions generally comprise greater water content than concentrated compositions, which are intended to be diluted at the point of use. A ready-to-use composition may comprise from about 80% to about 99.9%, or from about 90% to about 99.5% water, or from about 91% to about 99% water by weight of the composition.

### Concentrate composition

The composition may be in concentrated form wherein the concentrate is diluted to create a ready-to-use (RTU) composition of the invention. Dilution can be accomplished using any type of water as described above, though in many embodiments, dilution will be achieved using conventional tap water. For purposes of improved sustainability and better economics, dilute-able concentrates represent an important embodiment of the present invention. Dilution from about 1:3 (1 part concentrate plus 2 parts water) to about 1:30 (one part concentrate to 29 parts water), more preferably from about 1:4 to about 1:15 is recommended. In most embodiments, the dilution will be from about 1:5 to about 1:10 though actual dilution level will depend upon several factors including dilution means and equipment, desired concentrate price point and product safety considerations and marketing objectives. Concentrates of the invention comprise from about 0.8% to about 5% DODMA compound, more preferably from about 1% to about 3% DODMA compound. The concentrates also comprise from about 1% to about 15% non-ionic surfactant, preferably from about 1.5% to about 10% 2-ethylhexyl APG, C8-10 APG, C8-12 amine oxide, C8-12 alkylbetaine, and mixtures thereof. The concentrate also comprises from 0 to about 6% polymer. It is surprisingly found that polymer, even at low levels, will mitigate the toxicological effects of the DODMA compound; as such preferred concentrates include from about 0.2% to about 3% of a film-forming polymer by weight of the overall composition. In cases for which the toxicological profile of the concentrate can be rendered acceptable to users, the concentrates afford the opportunity to be employed directly without dilution. This can be very advantageous to enable very short bactericidal, fungicidal, virucidal contact times (e.g., 10 seconds- 1 minute) or for offering enhanced broad spectrum cidal activity vs. extremely tough to inactivate or kill microorganisms such as *Poliovirus, Tuberculosis bovis* and *Clostridium difficile* (e.g., at 1-minute to 10-minute contact times).

### Wipe article

The present invention also relates to an article treated with the composition of the invention. The article is preferably a wipe. Suitable wipes can be fibrous. Suitable fibrous wipes can comprise polymeric fibres, cellulose fibres, and combinations thereof. Suitable cellulose-based wipes include kitchen wipes, and the like. Suitable polymeric fibres include polyethylene, polyester, and the like. Polymeric fibres can be spun-bonded to form the wipe. Methods for preparing thermally bonded fibrous materials are described in U.S. application Ser. No. 08/479,096 (see especially pages 16-20) and U.S. Pat. No. 5,549,589 (see especially Columns 9 to 10). Suitable pads include foams and the like, such as HIPE-derived hydrophilic, polymeric foam. Such foams and methods for their preparation are described in U.S. Pat. No. 5,550,167; and U.S. patent application Ser. No. 08/370,695.

In a preferred embodiment, the invention relates to a wipe article whose structure and make-up is described in U.S. Pat. No. 10,874,279, incorporated herein by reference. A preferred structure of the wipe consists of multiple layers, the wipe comprising one or more scrims, which may 'sandwich' the core component of the wipe between 2 scrim components when two scrims are present. The scrim component is a fibrous component comprising a plurality of filaments and can act as a scrubbing layer and/or a metering layer. The scrim filaments preferably comprise a polymer, preferably a thermoplastic polymer. In one embodiment, the thermoplastic polymer comprises polypropylene, polyethylene, copolymer of polypropylene or copolymer of polyethylene. In a highly desired embodiment, the thermoplastic polymer is polypropylene. The scrim has a basis weight from about 3 grams per square meter to about 15 grams per square meter and is directly bonded to a core forming a coform structure. The core comprises a plurality of filaments and a plurality of solid additives. The core filaments may comprise a polymer selected from the group consisting of: polylactic acid, polycaprolactone, polyhydroxyalkanoate, polyesteramide and mixtures thereof. The core filaments may comprise a biodegradable and/or compostable polymer. The filaments may be randomly arranged within the core wipe fibrous structure as a result of the process by which they are spun and/or formed into the core fibrous structure. The solid additives, typically either wood or non-wood pulp fibers, may be randomly dispersed throughout the fibrous structure in the x-y plane. The solid additives may be randomly or non-randomly dispersed throughout the fibrous structure in the z-direction. The basis weight of the core structure is from 20 grams per square meter to about 60 grams per square meter. The weight ratio of pulp fibers to filament in the overall coform structure is preferably from about 30:70 to about 80:20, more preferably from about 40:60 to about 70:30. An equal to higher content of pulp fibers to filament can be advantageous in enabling enhanced solution volume retention by the wipe, enabling a higher solution load factor (grams of solution per gram of coform nonwoven) per wipe. A higher pulp content can also help deliver improved evenness of solution metering on a hard surface. This can result in enhanced wipe mileage for the user. The basis weight of the full coform structure comprised of at least one scrim layer and at least one core layer, more preferably one core layer conformed with 2 scrim layers, is from about 25 grams per square meter to about 70 grams per square meter, more preferably from about 35 grams per square meter to about 60 grams per square meter. In a highly preferred embodiment, the coform wipe has a basis weight of from about 40 grams per square meter to about 55 grams per square meter.

The wipe can have any dimensions, though x-y dimension will typically range from about 15 cm to about 20 cm; in one embodiment the dimensions of the wipe are 17.5 cm X 17. 5 cm; in another embodiment, the dimensions are 17.5 cm X 20 cm. The composition of the invention is loaded onto the dry wet wipe at a ratio of from about 3 grams of composition per gram of dry wipe to about 8 grams for composition per gram of dry wipe (3:1 to 8:1 load factor). More preferably, the composition load factor is from about 4:1 to about 7:1, and most preferably from about 4.5:1 to about 6:1.

### Aerosol composition

The composition can be made in the form of an aerosol. In addition to the composition of the invention, aerosols also comprise one or more propellants to dispense the composition from a pressurized can. The propellant can be any of those known in the art, such as n-propane, n-butane, isobutane, n-pentane, dimethyl ether, and the like, and blends thereof. Organic propellants generally constitute from about 1% to about 15%, more preferably 2% to 12% by weight of the composition. The propellant amount chosen is sufficient to fully expel the composition from the pressurized can, and this generally means an internal gas pressure of 20 to 150 pounds per square inch. In one embodiment, the propellant is a gas such as carbon dioxide, compressed air and especially, liquid nitrogen. These liquified propellants, if present, preferably constitute from about 0.3% to about 3% by weight by weight of the composition. Aerosol compositions are preferably adjusted to alkaline pH, from about pH 7 to about pH 11, or from about pH 7.5 to pH 9.5. An aerosol-based composition will also typically include corrosion inhibitor agents for compositions that are directly in contact with the pressurized metal can. Non-limiting examples of corrosion inhibitors include sodium molybdate, sodium nitrite and sodium benzoate, ethanolamine, isopropanolamine, triethylamine and ammonium hydroxide. Other useful anti-corrosive compounds such as borates and silicates can also be incorporated. When present, the level of corrosion inhibitors is from about 0.02% to about 0.5%, more preferably from about 0.04% to about 0.15% by weight of the overall composition. In one embodiment, the aerosol composition is housed in a bag inside the aerosol can. In such an instance, corrosion inhibitors may not be needed.

### Composition tackiness, shine end result, toxicity and cleaning

Careful selection of the surfactant, quaternary ammonium compound and optional cleaning solvent enable the composition of the invention to provide residual self-sanitizer/ self-disinfectant benefits while also simultaneously resolving the tackiness issue, the surface shine issue and the cleaning issue posed by compositions of the prior art.

Prior art compositions include high levels of polymer to deliver long lasting residual self-sanitizer or residual self-disinfectant benefits. The polymer is chosen to immobilize quaternary ammonium compound on treated surfaces, thereby making it less susceptible to the effects of abrasion. In effect, the polymer 'temporary attaches' the active to the surface, ensuring that quaternary ammonium compound is available for cidal activity even after multiple touches over a 24-hour period or longer. Unfortunately, this mode of action (i.e., polymer immobilization of active on surface) may lead in some cases to noticeable tackiness surface feel. Moreover, the feel can be made worse in a soiled environment as the polymer 'temporary attachment' mechanism is not specific to quaternary ammonium compounds; it also applies to soil. Far from providing cleaning, the compositions of the prior art in some cases can cause a deterioration in shine and cleaning that builds up and can get worse over time and with continued use. By limiting polymer content from 0 to about 0.25%, more preferably from 0 to about 0.15%, still more preferably 0 to about 0.10% by weight of the composition, and most preferably nil polymer, the compositions of the present invention are noticeably less tacky or completely non-tacky after drying down on surfaces versus alternative quat-based compositions known in the art to deliver residual self-sanitizer or residual self-disinfectant benefits.

Excellent shine end result on surfaces can be achieved by the combination of specific surfactant and DODMA- compound. While not wishing to be limited by theory, it is believed that short chain non-ionic (or zwitterionic or amphoteric) surfactants with an average chain length less than 12 carbon non-ionic surfactants interfere less with the activity of the quaternary ammonium compound relative to longer chain length surfactants. The primary function of short chain surfactant is enhancement of the hydrophilic character of the composition and surface wetting. This inhibits de-wetting caused by hydrophobic DODMAC-comprising quaternary ammonium compound that leads to uneven drying and formation of clearly visible streaks. In one embodiment to drive surface shine end result, the composition does not include benzalkonium compound in addition to DODMAC. In another embodiment, the composition is free of didecyldimethyl ammonium compound. In yet another preferred embodiment, the composition comprises dioctyldimethyl ammonium chloride and didecyldimethyl ammonium chloride (DDDMAC) when the surfactant also comprises a C10 dimethyl amine oxide. In still another embodiment, the composition includes from 0.01% to 0.15% by weight of the composition of a hydrophilic polymer that enhances surface gloss. In these embodiments, the weight ratio of short chain surfactant to DODMA-comprising quaternary ammonium compound to achieving good shine is important. Weight ratios from about 1:1 to about 3:1, or from about 1.2:1 to about 2:1 are preferred for delivery of surface shine, though such ratios do depend on the specifics of the composition. For example, higher weight ratios of surfactant to DODMAC versus surfactant to DODMAC + DDDMAC may be desirable/needed as DDDMAC is a better solubilizer of fragrance and other hydrophobic raw materials that may be present in the composition.

DODMAC has a Critical Micelle Concentration (CMC) near 5000 ppm, meaning that, in the absence of surfactant, it is fully present in monomeric form up to 0.5% in water. While not wishing to be limited by theory, high quaternary ammonium monomer in solution is believed to be important to long-lasting residual biocidal applications. As DODMAC is a twin-tailed di-C8 compound, it also believed to have a strong propensity of disrupt lipid bilayers protecting microorganisms. Also, as the smallest of the cidal quats (Mw = 306 g/mol) and with a small head group, DODMAC packs better at interfaces, including the solid air interface (i.e., enhanced number of molecules per unit surface area) relative to alternative quaternary ammonium compounds. This property can be important for driving continuous microbiocidal protection of surfaces onto which DODMAC is adhered to.

The composition of the invention can include any surfactant comprising an average less than 12 carbon atoms to the head group of the surfactant as long as the surfactant is not an anionic surfactant. However, not all surfactants of the invention surfactants are found to provide good shine end result on surfaces. In a preferred embodiment, the surfactant is chosen to maximize shine end result as well as cleaning end result appearance on hard surfaces. The composition can include any quaternary ammonium compound blend so long as the DODMAC content in the composition is at least 0.05%. However, not all quaternary ammonium blends of the invention are found to provide good shine end result on surfaces. In a preferred embodiment, the quaternary ammonium compound is chosen to maximize shine end result as well as cleaning end result appearance on hard surfaces.

It has been found that the best blend of DODMAC-comprising quaternary ammonium compounds is the pure dioctyldimethyl ammonium chloride. As the strongest active for residual self-sanitizer/ self-disinfectant properties, especially vs. *Klebsiella aerogenes,* DODMAC is effective at lower levels vs. quaternary ammonium compound blends comprising DODMAC. Additionally, pure dioctyldimethyl ammonium chloride generally delivers the best shine end result surface appearance, especially when paired preferred surfactant (*vide infra*)*.* In some cases, when dioctyldimethyl ammonium chloride does not sufficiently solubilize perfume or other components in the composition, longer chain length quaternary ammonium compound can be added. Preferably, the surfactant and fragrance type and level are chosen so as to not require addition of non-DODMAC quaternary ammonium compound.

Short chain surfactants for good surface shine end result and strong cidal efficacy include C8-12 dimethyl amine oxide, C8-C12 betaine and C8-C10 polyglucoside. It has been found that the combination of short chain surfactant (most preferably APG, betaine or amine oxide) and dioctyldimethylammonium chloride deliver the overall best results for surface shine end result and residual self-sanitizer/ self-disinfectant cidal efficacy. It is believed that the high critical micelle concentration (CMC) for DODMAC and high CMC for short chain surfactants are advantageous for both shine end result and long-lasting antimicrobial benefits. During the dry-down process (following application on a hard surface), solutions comprising lower CMC surfactant and quaternary ammonium compound form mixed micelles which are believed to dry in large size aggregates leading to enhanced visibility left-behind surface residue. Longer chain length surfactants, those averaging 12 carbon atoms or more, are found to lead to excessive filming/streaking and can also be detrimental for RSS. Poorer RSS results may stem from excessive interaction between the longer chain surfactant and the quaternary ammonium compound that reduces availability of the latter in short contact time cidal activity applications.

It has is also found that dioctyldimethyl ammonium chloride exhibits a poorer eye toxicity profile relative to other quaternary ammonium compounds. In cases where the toxicity profile needs improvement, blends of DODMAC with other quaternary ammonium compounds can be helpful.

Glycol ether solvent, known in the art to provide tough soil removal properties, can inhibit the power of the composition to impart long-lasting residual self-sanitizer or residual self-disinfectant properties on inanimate surfaces. Consequently, the level of glycol ether solvent is preferably kept below 2%. If present, the most preferred glycol ether is ethylene glycol n-hexyl ether (AKA Hexyl Cellosolve^{®} from Dow Chemical) as it is least harmful to RSS results and is also a very good cleaning solvent.

For use applications requiring strong cleaning properties, the composition of the invention can include an alkanolamine in place of, or in addition to, low levels of glycol ether. Alkanolamine compounds can simultaneously act as solvents and alkalinity/ high pH buffering agents and can therefore be more efficient alternatives to glycol ethers. As such, the level of alkanolamine in the composition is from 0 to about 1%, more preferably from 0 to about 0.5% by weight of the composition. Selection of low levels (e.g., 0-0.5% or 0-0.25%) of volatile (e.g., ≥1 mm Hg at 20_{°}C) alkanolamine solvent simultaneously provides cleaning power and reduces left-behind surface residue. Examples of alkanolamine compounds for use herein include triethanolamine and diisopropanolamine, and the like. Preferred alkanolamine solvent, especially for cleaning, includes ethanolamine, isopropanolamine and 2-methyl-2-amino-1-propanol, and mixtures thereof.

### Method of cleaning a surface

The composition of the invention is particularly suited for cleaning of inanimate surfaces preferably selected from the group consisting of: ceramic, enamel, stainless steel, Inox^{®}, Formica^{®}, vinyl, no-wax vinyl, linoleum, melamine, glass, plastics and plastified wood, and combinations thereof. In particular, the compositions are particularly suited for reducing the microbial population, while leaving surfaces clean, shiny and grease free.

The compositions described herein can be used neat or can be achieved by diluting with water a concentrated composition prior to applying to the surface. In preferred methods, the composition is applied neat, more preferably, the hard surface cleaning composition is sprayed from an aerosol can or from a trigger spray bottle onto the hard surface.

The composition can be applied by any suitable means, including using a mop, sponge, cloth, paper towel, wipe, or other suitable implement.

The surface may be rinsed, preferably with clean water, in an optional further step, and also as a further step, wiped, such as with a cloth or a paper towel. However, rinsing is most often completely unnecessary given the low level of raw materials in the composition and the excellent shine end result and cleaning that is achieved in the absence of a rinse step. Excessive rinsing may also be deleterious with respect to the bactericidal and virucidal 24-hour protection provided by the compositions of the invention. Excessive wiping can also be counterproductive.

In another preferred embodiment of the present invention said method of cleaning an inanimate surface includes the steps of applying, preferably spraying, said liquid composition onto said surface, leaving said liquid composition to act onto said surface for a period of time with or without applying mechanical action, and optionally removing said liquid composition, preferably removing said liquid composition by rinsing said hard surface with water and/or wiping said hard surface with an appropriate implement, e.g., a sponge, a paper or cloth towel and the like. Such compositions are often referred to as "ready-to-use" compositions. In preferred methods, the surface is a hard surface. Preferably the surface is not rinsed after application of the antimicrobial composition.

It is believed that the antimicrobial compositions deliver very good antimicrobial efficacy at low levels of dioctyldimethyl ammonium compound. The antimicrobial composition of the present invention exhibits improved antimicrobial efficacy, good grease cleaning and/or streak-free shine.

Examples of preferred compositions for use herein include:
An aqueous antimicrobial composition comprising:
   i) from about 0.1% to about 0.4% by weight of the composition of dioctyldimethylammonium compound, preferably dioctyldimethylammonium chloride;
   ii) from about 0.05% to about 1% by weight of the composition of a surfactant selected from the group consisting of alkyldimethylamine oxide, alkylpolyglucoside and a mixture thereof wherein the average alkyl chain length of the surfactant is preferably less than 12 carbon atoms and 6 or more carbon atoms;
   iii) from 0 to about 0.3% by weight of the composition of a polymer;
   iv) at least 90% by weight of the composition of water.
An aqueous antimicrobial composition comprising:
   i) from about 0.1% to about 0.4% by weight of the composition of dioctyldimethylammonium chloride;
   ii) from about 0.05% to about 0.8% by weight of the composition of a surfactant selected from the group consisting of 2-ethylhexyl alkylpolyglucoside, C8-C10 alkylpolyglucoside, C8-C12 dimethylamine oxide, especially C10 dimethylamine oxide, and a mixture thereof.
   iii) from 0 to about 0.3% by weight of the composition of a polymer;
   iv) from 0 to about 0.5% by weight of a composition of an alkanolamine selected from the group consisting of ethanolamine, 2-amino-2-methyl-1-propanol, isopropanolamine, triethanolamine, and a mixture thereof;
   v) at least 90% by weight of the composition of water.
An aqueous antimicrobial aerosol composition comprising:
   (i) from about 0.1% to about 0.4% by weight of the composition of dioctyldimethylammonium chloride;
   (ii) from about 0.10 to about 0.25% by weight of the composition of the composition of a surfactant selected from the group consisting of C8-C10 alkylpolyglucoside, C8-C10 alkyldimethylamine oxide, 3-(polyoxyethylene)propylheptamethyltrisiloxane; and a mixture thereof;
   (iii) from 0 to about 0.3% by weight of the composition of a polymer;
   (iv) from 0 to about 0.3% of an alkanol amine selected from the group consisting of ethanolamine, isopropanolamine, 2-amino-2-methyl-1-propanol, triethanolamine, and a mixture thereof
   (v) from 0 to about 0.2% of a corrosion inhibitor selected from the group consisting of sodium nitrite, sodium molybdate, sodium nitrite, and a mixture thereof;
   (vi) from about 0.3% to about 0.7% by weight of the composition of liquid nitrogen as a propellant.
   (vii) at least 95% by weight of the composition of water; wherein the composition is free of dialkyldimethylammonium compound.
An aqueous antimicrobial concentrate composition, intended to be diluted 1:5 (1 part concentrate to 4 parts water) at the point of use, comprising:
   i) from about 0.5% to about 2% by weight of the composition of dioctyldimethylammonium chloride;
   ii) from about 0.25% to about 4% by weight of the composition of a surfactant selected from the group consisting of 2-ethylhexyl alkylpolyglucoside, C8-C10 alkylpolyglucoside, C8-C12 dimethylamine oxide, especially C10 dimethylamine oxide, and a mixture thereof.
   iii) from about 0.5 to about 3% by weight of the composition of a polymer;
   iv) at least 80% by weight of the composition water.

### EXAMPLES

For the Germicidal Spray Test (GST) results, the following microorganism abbreviations are used:
SA = *Staphylococcus aureus* ATCC 6538
PA = *Pseudomonas aeruginosa* ATCC 15442
TI = *Trichophyton interdigitale* ATCC 9533

For the Residual Self-Sanitizer (RSS) tests, the following microorganism abbreviations are used:
KP = *Klebsiella pneumoniae* ATCC 4352
SA = *Staphylococcus aureus* ATCC 6538
H1N1 = Influenza (H1N1) virus ATCC VR-1469, Strain A/PR/8/34

Just prior to testing, the concentrate compositions are diluted in 200 ppm unsoftened water tap (abbreviated `Tap H₂O'). The methodology is described in the Association of Official Analytical Chemists (AOAC). A 1:10 dilution means that a ready-to-test solution is made by combining with 9 milliliters of water for each milliliter of the composition to be diluted. For GST results are reported as the number of carriers showing growth divided by the total number of carriers. For RSS results are reported as log10 reduction number.

### Abbreviations for chemicals

EH APG: 2-ethylhexyl alkypolyglucoside, tradename AG6202, supplied by Nouryon Corporation as a 60% active raw material in water.
C₈₋₁₀ APG: Octyl-decyl alkylpolyglycoside, tradename Triton^{®} CG-50, supplied by the Dow Chemical Company as a 50% active raw material in water.
C₁₀ AO: Decyldimethyl amine oxide, tradename Macat^{®} AO-10 supplied by the Pitot Chemical Company as a 30% active raw material in water.
DODMAC: Dioctyldimethylammonium chloride, tradename Bardac LF-80, supplied by the Arxada Company as an 80% active raw material in water and ethanol.
DADMAC: A blend of dialkyldimethylammonium chloride quaternary ammonium compounds consisting of 25% dioctyldimethylammonium chloride, 50% octyldecyldimethylammonium chloride and 25% didecyldimethylammonium chloride, tradename Bardac^{®} 2080, supplied by the Arxada Company as an 80% active raw material in water and ethanol.
DDDAC: Didecyldimethylammonium chloride, tradename Bardac^{®} 2250, supplied by the Arxada Company as a 50% raw material in water (∼40%) and ethanol (∼10%).
BTC: A blend of quaternary ammonium compounds consisting of 40% *n*-alkyl (40% C12, 50% C14, 10% C16) dimethylbenzylammonium chloride, 15% dioctyldimethylammonium chloride, 30% octyldecyldimethylammonium chloride and 15% didecyldimethylammonium chloride, tradename BTC^{®} 885, supplied by Stepan Company as a 50% active raw material in water (∼40%) and ethanol (∼10%).
MEA: Monoethanolamine, supplied by Clariant as a 99+% viscous liquid.
GANEX: Partially butylated polyvinylpyrrolidone polymer, tradename Ganex^{®} P-904 LC, supplied by Ashland Corporation as a 95+% active powder.
STYLEZE: A copolymer of a copolymer of vinylpyrrolidone and dimethylaminopropyl methacrylamide (with chloride counter-ion, Mw ∼ 1,300,000), tradename Styleze CC-10, supplied Ashland as a 10% active raw material in water.
SOREZ: A copolymer of vinyl pyrrolidone and dimetylaminoethylmethacrylate (Mw ∼ 1,000,000), tradename Sorez HS-205, supplied by Ashland as a 20% active raw material in water.
GAFQT: A copolymer of vinylpyrrolidone and dimethylaminoethylmethacrylate quaternized with diethyl sulfate (Mw ∼ 1,000,000), tradename Gafquat 440, supplied by Ashland as a 30% active raw material in water.

### PERFUME: AI187500 Tangerine Twist from Arylessence.

All raw materials used in the tests below are provided on a raw material active basis. For example, a composition comprising 0.50% DODMAC contains 0.50% active dioctyldimethyl ammonium chloride, which is equivalent to 0.625%% of the 80% active Bardac LF-80 raw material.

### Compositions 1-4 GST & RSS Testing:

10X concentrate prototypes are made and then diluted 1: 10 in 200 ppm unsoftened water prior to running Germicidal Spray (GST) tests and Residual Self Sanitizer (RSS) tests. Microorganism inoculum count was ≥ 6 log for SA (GST & RSS), PA (GST) and KP (RSS) testing, and ≥ 5 log for TI (GST) testing.

### 10X Concentrate compositions #1-4

| Ingredient | 1 (wt %) | 2 (wt %) | 3 (wt %) | 4 (wt %) |
|---|---|---|---|---|
| C₈₋₁₀ APG | 10.00 | 10.00 | 10.00 | 5.00 |
| DODMAC | 4.50 | --- | --- | 2.80 |
| DADMAC | --- | 4.50 | 4.50 | --- |
| DDDMAC | --- | --- | --- | --- |
| MEA | 1.00 | 1.00 | --- | --- |
| Perfume | 1.00 | 1.00 | 1.00 | 1.00 |
| DI H2O | Remainder | Remainder | Remainder | Remainder |
| pH | 11.0 | 11.0 | 8.8 | 5.4 |

### 1X RTU compositions following 1:10 dilution (200 ppm unsoftened tap water)

| Ingredient | 1 (wt %) | 2 (wt %) | 3 (wt %) | 4 (wt %) |
|---|---|---|---|---|
| C₈₋₁₀ APG | 1.00 | 1.00 | 1.00 | 0.50 |
| DODMAC | 0.45 | --- | --- | 0.28 |
| DADMAC | ---- | 0.45 | 0.45 | --- |
| MEA | 0.10 | 0.10 | --- | --- |
| Perfume | 0.10 | 0.10 | 0.10 | 0.10 |
| H2O | Remainder | Remainder | Remainder | Remainder |
| pH | 10.5 | 10.5 | 8.7 | 7.4 |
| % DODMAC | 0.45 | 0.11 | 0.11 | 0.28 |

| Diluted Composition | RSS vs. KA 5 minutes | GST vs. SA 1 minute | GST vs. PA 1 minute | GST vs. TI 5 minutes |
|---|---|---|---|---|
| 1 | ≥ 4.1 | 0/60 | 0/60 | 0/30 |
| 2 | 3.5 | 0/60 | 0/60 | 0/30 |
| 3 | 3.0 | 0/60 | 0/60 | 1/30 |
| 4 | ≥ 5.0 | 0/60 | 0/60 | 1/30 |

| | | | | |
|---|---|---|---|---|
| NT= Not Tested | | | | |

### 1X RTU compositions following 1:10 dilution (200 ppm unsoftened tap water)

| Ingredient | 5 (wt %) | 6 (wt %) | 7 (wt %) | 8 (wt %) |
|---|---|---|---|---|
| C₈₋₁₀ APG | 1.00 | 1.00 | 1.00 | 1.00 |
| DODMAC | --- | --- | --- | --- |
| DDDMAC | --- | 0.45 | 0.70 | --- |
| DADMAC | --- | --- | --- | 0.70 |
| BTC | 0.70 | --- | --- | --- |
| MEA | --- | --- | --- | 0.10 |
| PERFUME | 0.10 | 0.10 | 0.10 | 0.10 |
| H2O | Remainder | Remainder | Remainder | Remainder |
| pH | 7.5 | 8.7 | 8.6 | 10.5 |
| % DODMAC | 0.10 | 0.00 | 0.00 | 0.11 |

| Diluted Composition | RSS vs. KA 5 minutes | GST vs. SA 5 minutes | GST vs. PA 5 minutes | GST vs. TI 5 minutes |
|---|---|---|---|---|
| 5 | 3.4 log | 0/60 | 0/60 | 0/30 |
| 6 | 1.0 log | 0/60 | 1/60 | 0/30 |
| 7 | 1.6 log | 1/60 | 0/60 | 1/30 |
| 8 | 3.9 log | 0/60 | 0/60 | 0/60 |

Upon dilution, all of the compositions tested passed the Germicidal Spray Test vs. bacteria (0/60 or 1/60) vs. Gram (+) and Gram (-) bacteria at a 1-minute contact time, and all provided either 0/30 or 1/30 failures vs. fungi at a 5 minute contact time. Despite all compositions delivering similar cidal efficacy performance as measured by the GST, they differ significantly on residual cidal efficacy performance as measured by the RSS test. Surprisingly, RSS performance does not correlate well with level of quaternary ammonium compound. For example, composition 5 comprises 0.70% cidal quat, but only delivers a 3.4 log organism reduction vs. KA whereas composition 4 with only 0.28% quaternary ammonium compound provide at least a 5 log kill on the same test. Even more surprising are the results for composition 7, which comprises 0.70% quaternary ammonium quat but only delivers a 1.6 log reduction vs. KA in the RSS test. Compositions in examples 6 and 7 comprise no DODMAC content and by far exhibit the worst RSS results. Compositions 2, 3 and 5 comprise 0.10-0.11% DODMAC content and achieve 3.0-3.4 log reduction vs. Ka in the RSS. Composition 8 has a 0.17% DODMAC content and delivers a 3.9 log reduction for Ka in the RSS. Compositions 1 and 4 have much higher DODMAC content and also provide even stronger results, achieving complete kill in at least some if not all of the carriers.

### Residual Self Sanitizer/Viral test results vs. KP, KA and H1N1

Compositions 5, 9 and 10 and were also tested to ascertain RSS efficacy vs. alternative microbes, including *Klebsiella pneumonaie, Staphylococcus aureus* and *H1N1.*

| Ingredient | 5 (wt %) | 9 (wt %) | 10 (wt %) |
|---|---|---|---|
| C₈₋₁₀ APG | 1.00 | 0.50 | 0.25 |
| DODMAC | --- | 0.24 | 0.09 |
| DADMAC | --- | --- | --- |
| BTC | 0.70 | --- | --- |
| GANEX | --- | --- | 0.20 |
| MEA | --- | --- | 0.10 |
| PERFUME | 0.10 | 0.10 | 0.10 |
| DI H2O | Remainder | Remainder | Remainder |
| pH | 7.5 | 8.3 | 10.2 |
| % DODMAC | 0.10 | 0.24 | 0.09 |

| Diluted Composition | RSS vs. KA 5 minutes | RSS vs. KP 5 minutes | RSS vs. SA 5 minutes | RSS vs. H1N1 5 minutes |
|---|---|---|---|---|
| 5 | 3.4 | ≥ 4.8 | NT | NT |
| 9 | NT | ≥ 4.9 | ≥ 4.9 | ≥ 4.3 |
| 10 | NT | ≥4.6 | ≥4.9 | 2.3 |

| | | | | |
|---|---|---|---|---|
| NT = Not Tested | | | | |

Composition 5 illustrates that the compositions of the invention are also effective in RSS testing vs. KP. Composition 9 was not tested vs. KA though the very similar composition 4 (0.28% vs. 0.24% DODMAC) demonstrated at least a 5-log reduction in RSS testing vs. KA; composition 10 is also effective vs. KP, SA and H1N1; composition 9 is also effective for GST vs. SA (0/60, 1 minute), PA (0/60, 1 minute) and TI (0/30, 5 minutes) (data not shown on table). Composition 10 illustrates that strong RSS results are still obtainable even with the DODMAC level at 0.09%; results are aided by inclusion of low levels of film-forming polymer.

### Shine end result testing method

High gloss black ceramic tiles (30.5 cm X 30.5 cm) are precleaned, rinsed, wiped dry (Bounty^{®} paper towel) and then treated with 70% isopropanol covering the tile prior to being wiped dry again. Nine (9) evenly spaced glossmeter measurements (Rhopoint glossmeter) are taken, and the average of these is recorded. 1.00-1.05 grams of test solution are then pipetted onto the tile with droplets (~ 15-25) evenly dispersed throughout the tile. Bounty paper towel (half size perforated, 28.5 cm X 14 cm) is folded in half along the length and folded in half a second time. The pre-folded paper towel is then used to wipe the tile up-and-down 6 times, and side-to-side 6 times along paper towel's length edge. Gloss measurements are again recorded and averaged. Results for 20_{°} gloss and maximum spectral reflectance (RSpec) are provided herein. The 20_{°} gloss average is chosen because it provides the most sensitivity on a high energy surface (glossy ceramic); RSpec represents the peak reflectance measured over a very narrow angular band in the specular direction (+/- 0.0991); as such it provides an indication of the uniformity of the solution. By subtracting tile gloss post solution treatment from that pre-solution treatment, the gloss loss (Δ20_{°}, ΔRSpec) from the solution treatment is computed. Reduced losses as measured by Δ20_{°} and ΔRSpec measurements are indicative of better filming performance. Glossmeter measurements (Δ20_{°}, ΔRSpec) provide a good indication of the filming caused by the compositional treatment on tile, but do not provide a good indication of streaking or spotting. For this reason, visual grade assessments are also made. Visual grades complement the glossmeter measurements and are assessed on a 5-point scale: Excellent, Very Good, Good, Fair and Poor.

### Cleaning end result testing

The end result cleaning test is a 2-part test that uses the same tile as the shine end result test. Prior to solution treatment on tile, 0.02 grams of Crisco vegetable oil are rolled (Shur-Line ~7 cm width, ∼0.95 cm nap 'Trim & Touch up roller', Mooresville, NC, USA) onto a 10 cm X 10 cm square area in the middle of the tile. In the first part of the test, 1.00-1.05 grams of test solution are then pipetted onto the tile with droplets (~ 15-25) evenly dispersed throughout the tile. Bounty^{®} paper towel (half size perforated, 28.5 cm X 14 cm) is folded in half along the length and folded in half a second time. The pre-folded paper towel is then used to wipe the tile up-and-down 6 times, and side-to-side 6 times along paper towel's length. The first part of the test acts in large part to spread the soil from the centre of the tile to the full tile. In the second part, another 1.00-1.05 grams of test solution are then pipetted onto the tile with droplets (~ 15-25) evenly dispersed throughout the tile. A fresh piece of Bounty^{®} paper towel (half size perforated, ~ 28 cm X 14.5 cm) is folded in half along the length and folded in half a second time (final dimensions ~ 14 cm X 7 cm). The twice folded paper towel is then used to wipe the tile up-and-down 6 times, and side-to-side 6 times along paper towel's length. The second part of the test provides the estimate of cleaning by the test solution. At the end of the second part, gloss measurements are once again taken and recorded. By subtracting tile gloss post solution treatment from that pre-solution treatment, the gloss loss (Δ20_{°}, ΔRSpec) from the solution cleaning is computed. Glossmeter measurements (Δ20_{°}, ΔRSpec) provide a good indication of the filming caused by the compositional treatment on tile, but do not provide a good measurement of streaking or spotting. For this reason, visual grade assessments are also made. Visual grades complement the glossmeter measurements and are assessed on a 5-point scale: Excellent, Very Good, Good, Fair and Poor. It is noticed that in some cases, compositions with somewhat lower glossmeter results are still visually more appealing that alternate compositions, reflecting a trend the importance of surfactant selection to drive reduced tile streaking.

The samples below are made by diluting either a 10 X concentrate (Examples 1-14) or by making the samples as ready-to-use compositions in DI water (no dilution). Dilution for Examples 1-14 was performed in tap water (~ 7 gpg) prior to testing.

| Example | 1 | 2 | 3 | 4 | 5 | 6 | 7 | 8 | 9 | 10 |
|---|---|---|---|---|---|---|---|---|---|---|
| C₈₋₁₀ APG | 1.00 | 1.00 | 1.00 | 0.50 | 1.00 | 1.00 | 1.00 | 1.00 | 0.50 | 0.25 |
| DODMAC | 0.45 | | | 0.28 | | | | | 0.24 | 0.10 |
| DADMAC | | 0.45 | 0.45 | | | | | 0.70 | | |
| BTC | | | | | 0.70 | | | | | |
| DDDMAC | | | | | | 0.45 | 0.70 | | | |
| MEA | 0.10 | 0.10 | | | | | | 0.10 | | 0.10 |
| GANEX | | | | | | | | | | |
| PERFUME | 0.10 | 0.10 | 0.10 | 0.10 | 0.10 | 0.10 | 0.10 | 0.10 | 0.10 | 0.10 |
| Product pH | 10.5 | 10.5 | 8.7 | 7.4 | 7.5 | 8.7 | 8.6 | 10.5 | 8.3 | 10.2 |

| | Shine End Result Test | | |
|---|---|---|---|
| Example # | Δ20_{°} | ΔRSpec | Visual |
| 1 | -2.9 | -1.7 | Good |
| 2 | -4.2 | -2.8 | Fair |
| 3 | -4.9 | -1.7 | Fair |
| 4 | -3.7 | -2.4 | V. Good |
| 5 | -5.3 | -4.3 | Fair |
| 6 | -9.0 | -8.4 | Fair |
| 7 | -15.6 | -12.0 | Poor |
| 8 | -11.6 | -9.1 | Poor |
| 9 | -2.9 | -1.7 | V. Good |
| 10 | -3.9 | -1.5 | Good |

Examples 1-10 illustrate the role of quaternary ammonium compound selection to drive shine end result appearance on surfaces. While compositions 1-5 and 8-10 are all effective in providing 24 hour microbiocidal protection, best shine end result appearance is provided by examples 1, 4, 9 and 10, all of which comprise pure DODMAC- as opposed to blends of quaternary ammonium compounds that include DODMAC as a component of said blends deliver the overall best shine on tile as measured by glossmeter measurements and visual grading. Note that the compositions examples 6 and 7 which lie outside the invention are poor performers in the residual self-sanitizing test and in shine end result testing.

| Example | 11 | 12 | 13 | 14 | 15 | 16 | 17 |
|---|---|---|---|---|---|---|---|
| C₈₋₁₀ APG | | | 0.25 | | | | |
| EH APG | 0.25 | | | | | | |
| C 10 AO | | 0.30 | | 0.35 | 0.35 | 0.35 | 0.50 |
| DODMAC | 0.10 | | 0.10 | 0.20 | 0.20 | 0.20 | 0.30 |
| DADMAC | | 0.25 | | | | | |
| MEA | | | 0.10 | | | | |
| GANEX | 0.20 | | | | | | |
| STYLEZE | | | | 0.05 | | | |
| SOREZ | | | | | 0.10 | | |
| GAFQT | | | | | | 0.10 | |
| PERFUME | 0.10 | 0.10 | 0.10 | 0.10 | 0.10 | 0.10 | 0.10 |
| Product pH | 7.9 | 7.5 | 10.5 | 6.9 | 6.9 | 7.3 | 6.9 |

| | Shine End Result Test | | | Cleaning End Result Test | | |
|---|---|---|---|---|---|---|
| Example # | Δ20_{°} | ΔRSpec | Visual | Δ20_{°} | ΔRSpec | Visual |
| 11 | -3.3 | -2.8 | Good | -5.6 | -7.2 | Good |
| 12 | -2.4 | -0.2 | V. Good | -4.0 | -4.4 | V. Good |
| 13 | -3.2 | -1.5 | V. Good | -5.2 | -3.9 | Good |
| 14 | -1.9 | -1.4 | Excellent | -3.0 | -1.7 | V. Good |
| 15 | -3.7 | -3.9 | Good | -4.1 | -4.1 | Good |
| 16 | -1.7 | -0.5 | Excellent | -3.1 | -4.3 | V. Good |
| 17 | -2.5 | -2.3 | Good | -4.4 | -4.6 | Fair |

Examples 11-17 illustrate compositions of the invention that achieve strong overall shine end result appearance as well as strong overall cleaning end result appearance. These can be achieved with preferred surfactant types of invention over a wide pH range and with optional polymer content. Overall, best shine and cleaning results are achieved with the combination of C10 dimethylamine oxide with dioctyldimethyl ammonium chloride, with the best scoring product (Example 14) also comprising low levels of a shine polymer.

### Example 18 Wet Wipe Composition

A wipe laminate according to US Patent No. 10,874,279 is impregnated with an aqueous solution of the invention. The wipe, 17 cm X 17 cm, consists of a laminate comprising an upper scrim layer and lower scrim layer (4 grams per square meter each), encasing a fibrous middle layer. The overall basis weight of the coform substrate is 50 grams per square meter and average thickness is 0.70 mm. The tensile strength is 11.2 Newtons (Machine Direction) and 6.7 Newtons (Cross Direction). A canister comprising 30 dry wipes is loaded with 6.0 grams of solution per gram of substrate, the solution consisting of: 0.70% C8-10 APG, 0.42% DODMAC, 0.02% triethanolamine, 0.15% fragrance (F-196906 Citrus Fresh W/S EPA FIL Fragrance from Intarome Flavors and Fragrance Corporation), pH 8.4. Several weeks following impregnation, the wet wipe is tested for RSS vs. KP (5 minutes exposure) and tested using the GST vs. PA (1 minute exposure) and SA (1 minute exposure). Results are as follows: RSS ≥ 4.5 log reduction, GST vs. PA 0/60 and GST vs. SA 0/60. The results demonstrate the effectiveness of nil-polymer solutions comprising DODMAC in a wet wipes context.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. An aqueous antimicrobial composition comprising:
i) from about 0.01% to about 0.5% by weight of the composition of a dioctyldimethylammonium compound;
ii) from about 0.01% to about 1.5% by weight of the composition of a surfactant selected from the group consisting of non-ionic surfactant, cationic surfactant, zwitterionic surfactant, and a mixture thereof;
iii) from 0 to about 0.5% by weight of the composition of a polymer;
iv) at least 80% by weight of the composition of water; and
wherein the composition is substantially free of alkyldimethylbenzylammonium compound.

2. A composition according to claim 1 wherein the composition comprises less than about 0.3% by weight of the composition of the polymer.

3. A composition according to any of claims 1 or 2 wherein the composition is substantially free of polymer.

4. A composition according to any of the preceding claims comprising from about 0.1% to about 1% by weight of the composition of surfactant.

5. A composition according to any of the preceding claims wherein the surfactant is selected from the group consisting of C6-C12 alkylpolyglucoside, C8-C12 dimethylamine oxide, C8-C12 alkylbetaine, and a mixture thereof.

6. A composition according to any of the preceding claims wherein the surfactant is C10 dimethylamine oxide.

7. A composition according to any of the preceding claims comprising from about 0.05% to about 0.5% by weight of the composition of dioctyldimethylammonium chloride.

8. A composition according to any of the preceding claims comprising from about 0.05% to about 0.35% by weight of the composition of dioctyldimethylammonium chloride.

9. A composition according to any preceding claim wherein the composition is free of glycol ether solvent.

10. The composition according to any of the preceding claims wherein the composition further comprises a pH adjusting agent selected from the group consisting of monoethanolamine, 2-amino-2-propanolamine, triethanolamine, and a mixture thereof.

11. A composition according to any of the preceding claims wherein the composition has a pH of 4 or above as measured at 25°C.

12. A composition according to any of the preceding claims further comprising di-valent ion salt.

13. A composition according to any of the preceding claims further comprising a fragrance.

14. A composition according to any of the preceding claims wherein the composition is substantially free of cidally effective quaternary ammonium compound other than dioctyldimethylammonium compound, preferably dioctyldimethylammonium chloride.

15. A composition according to any of the preceding claims wherein the composition is in the form of an aerosol and the composition further comprises a corrosion inhibitor selected from the group consisting of sodium nitrite, sodium benzoate, triethanolamine, ethanolamine, sodium molybdate, sodium silicate, and a mixture thereof.

16. An article treated with a composition according to any of claims 1 to 15 wherein the article comprises a fibrous structure, preferably the fibrous structure comprises a non-woven material, preferably the article is in the form of a substrate and preferably the substrate has a load factor of from about 3 times to about 10 times of composition per gram of substrate.

17. An antimicrobial product comprising:
a) a composition according to any of claims 1 to 15; and
b) a spray device to produce a spray of said composition.

18. A method to provide residual biocidal activity to an inanimate surface wherein residual biocidal activity is measured according to the US EPA protocol #01-1A (vs *Klebsiella aerogenes*) wherein the method comprises the step of applying a composition according to any of claims1 to 15 to the surface.

19. A method to provide residual biocidal activity to an inanimate surface wherein residual biocidal activity is measured according to the US EPA protocol #01-1A (vs *Klebsiella pneumonaie*) wherein the method comprises the step of applying a composition according to any of claims1 to 15 to the surface.

20. A method to provide residual biocidal activity to an inanimate surface wherein residual biocidal activity is measured according to the US EPA protocol #01-1A with modifications (based on EPA interim guideline to show efficacy vs H1N1) wherein the method comprises the step of applying a composition according to any of claims 1 to 15 to the surface.

21. Use of a composition according to any of claims 1 to 15 to provide residual biocidal properties to an inanimate surface wherein the residual biocidal activity is measured according to the US EPA protocol #01-1A (vs *Klebsiella aerogenes*)*.*

22. Use of a composition according to any of claims 1 to 15 to provide residual biocidal properties to an inanimate surface wherein the residual biocidal activity is measured according to the US EPA protocol #01-1A (vs *Klebsiella pneumonaie*)*.*

23. Use of a composition according to any of claims 1 to 15 to provide residual biocidal properties to an inanimate surface wherein the residual biocidal activity is measured according to the US EPA protocol #01-1A (based on EPA interim guideline to show efficacy vs H1N1).
